# EUROPEAN PATENT SPECIFICATION

(11) **EP 2 537 630 B1**
(45) Date of publication and mention of the grant of the patent: **02.04.2014**
(21) Application number: 12425114.1
(22) Date of filing: 20.06.2012
(51) Int. Cl.: B23Q 3/155, B23Q 5/20, B23B 31/26

(54) **Multifunction machine tool with a system for the identification of the proper position of attachment or release of the tool**
Werkzeugmaschine mit einem System zur Feststellung der richtigen Spann- bzw. Entspannposition des Werkzeugs
Machine-outil avec système pour la détection de la position correcte de serrage ou déserrage de l'outil

(30) Priority: 20.06.2011 IT VI20110158
(43) Date of publication of application: 26.12.2012
(73) Proprietor: VEM S.p.A., 36015 Schio (VI) (IT)
(72) Inventor: Tonello, Paolo, 36015 Schio - Vicenza (IT)
(74) Representative: Iannone, Carlo Luigi

(56) References cited:
- EP-A2- 0 185 889
- FR-A1- 2 390 244
- JP-A- 60 131 125
- US-A- 4 075 927

## Description

The present invention relates to the field of operating machines and more precisely it relates to a multifunction machine tool with a system for the identification of the various positions of locking / unlocking of a shaft for said machines during the change of the tools.

In detail, the invention relates to a system for the identification of the proper position of attachment / release of a tool, which, through the use of at least two complementary mechanical elements, ensures high precision during the phase of coupling between the machine and the tool.

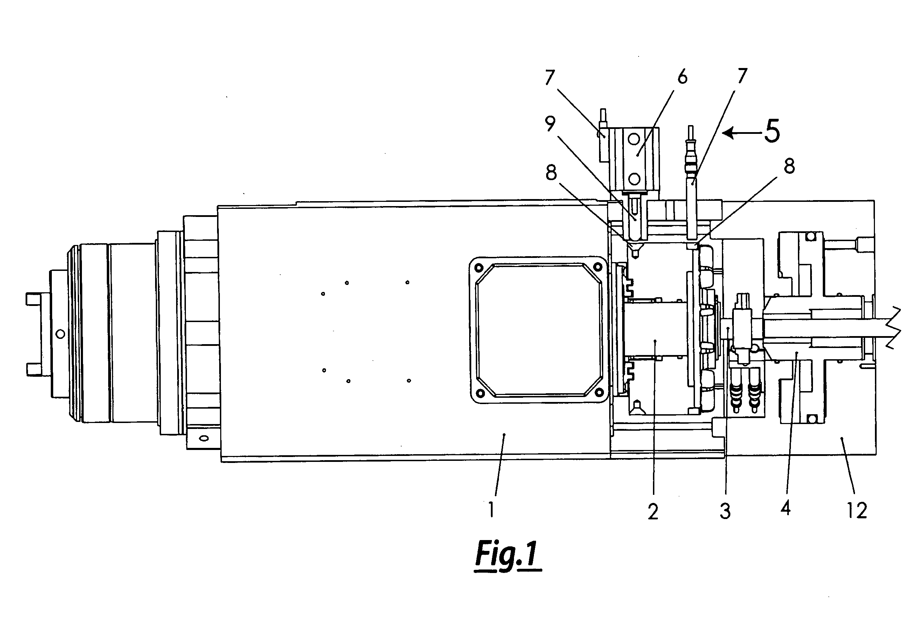

Multi-function operating machines, such as the machine shown in Figure 1, are currently commercially available; they are equipped with spindles which are already ready for the replacement of the tools and comprising a motor 1, a transmission shaft 2, a rod 3 for fixing the tool and a cylinder with piston 4 for changing the tool.

It is further possible to provide a central channel where water flows during the process, which is particularly useful when operations on special materials are performed.

In many cases said machines are equipped with a guidance system 5 or a system for detecting the position of the piston for changing the tool.

Usually, said guidance systems are connected to electronic equipments, such as toothed wheels, resolver, magnetic encoder, etc..

Said equipments are very accurate, however they are considerably expensive, because, in addition to the high costs of the machine, it is necessary to take into account the expense for the purchase of interfaces able to handle the components, making them interact with the machine.

Alternatively, it is possible to use mechanical devices, such as the devices generically indicated with 5 in Figure 1, comprising a pneumatic piston 6 for the orientation, which is equipped with sensors 7 for detecting the position of the piston with respect to suitable abutments 8, which are placed in correspondence with the desired blocking positions. This technical solution is cheaper than the equipment described above, however it is also much less accurate, because the piston 6 not always stops in the correct positions.

Moreover, the continuous movement of the abutments 8 and of the pneumatic piston within its cylinder 9 causes wear, further decreasing the accuracy in identifying the correct position of attachment / release of the tool, thus causing frequent replacements of the piston.

US-4,075,927 discloses a multifunction machine tool according to the preamble of claim 1.

An object of the present invention is, therefore, to overcome the above mentioned drawbacks of the prior art, in order to provide a system for the identification of the proper of attachment / release of a tool, which is extremely reliable and cheap, with respect to the prior art.

Another object of the present invention is to provide a system for the identification of a proper position of attachment / release of a tool, in particular for multifunction operating machines, which ensures a greater precision with respect to the precision reached by the known mechanical systems.

A further object of the present invention is to provide a system for the identification of a proper position of attachment / release of a tool, in particular for multifunction operating machines, which is cheaper than known systems.

Moreover, an object of the present invention is to provide a system for the identification of a proper position of attachment / release of a tool, in particular for multifunction operating machines, of simple construction, without using complex technologies or particularly expensive components, and simple in the operation for any operator.

A further object of the present invention is to provide a system for the identification of a proper position of attachment / release of a tool, which makes easy to use and competitive on the market the operating machine to which it is applied.

These and other objects are achieved, according to the present invention, by means of a multifunction machine tool according to claim 1.

Advantageously, according to the present invention it is not necessary to provide additional pistons or electronic devices in the operating machine, as it is possible to have a movement of the piston for changing the tool on the machine, thus advantageously reducing the number of the mechanical elements of the system, interacting with each other and also reducing the risk of wear.

The objects and advantages mentioned above will appear to a greater extent from the following description, relating to a preferred embodiment of the system for the identification of a proper position of attachment / release of a tool, in particular for a multifunctional operating machine, according to the invention, which is provided as exemplifying and preferred embodiment, and according to the enclosed drawings, in which:
- figure 1 shows a system for the identification of a proper position of attachment / release of a tool according to the prior art,
- figure 2 shows a system for the identification of a proper position of attachment / release of a tool according to the present invention,
- figure 3 shows an enlarged detail of figure 2.

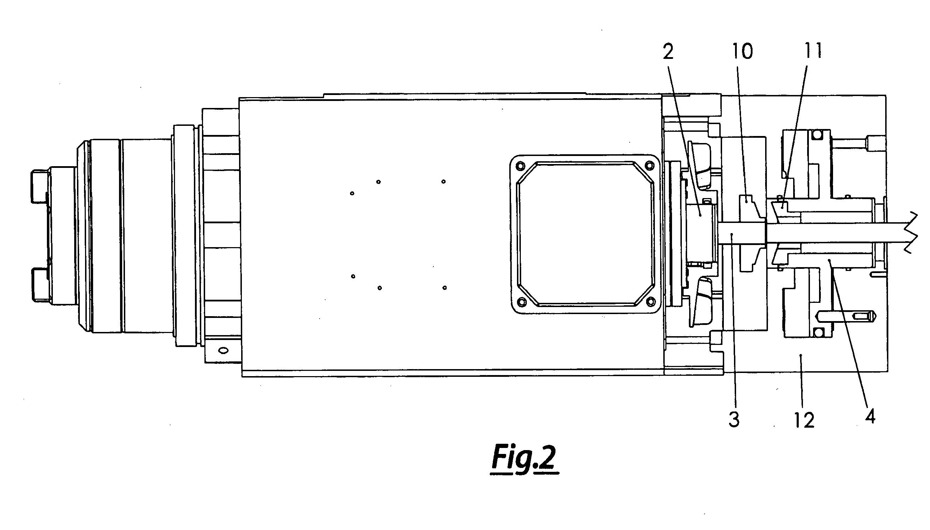

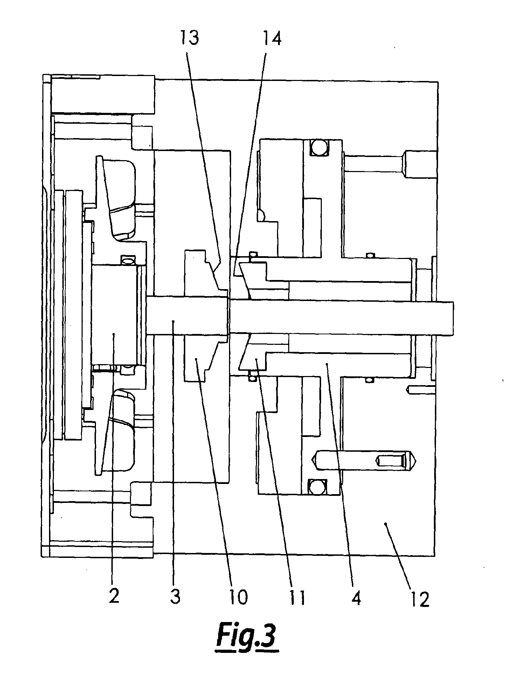

With particular reference to figures 2 and 3, the system according to the invention comprises a first mechanical element 10, mounted on the rod 3, which is integral to the motor shaft 2, and a second mechanical element 11, mounted on the piston 4, which is integral with the tool-carrying spindle 12, and having a profile corresponding and complementary to the first mechanical element 10, so that at each tool change it is sufficient that the mechanical elements 10 and 11 are close to each other to align their axis and automatically fit together.

In particular, as shown in figure 3, the first mechanical element 10 comprises a projecting part 13 substantially shaped as a truncated cone or a truncated pyramid, while the second mechanical element 11 comprises a frusto-conical or truncated-pyramidal hollow 14, where the projecting part 13 engages.

The two mechanical elements 10, 11 have two equivalent positions of reciprocal stable equilibrium, i.e. the position according to a correct placement of the rod 3 with respect to the piston 4.

Advantageously, when the tool change is actuated, it is not necessary to check the position of the spindle 12 and to correct its inclination with respect to the motor shaft 2, but it is sufficient that the piston 4 comes closer to the rod 3, so that the vertical plane of the motor shaft 2 and the vertical plane of the tool-carrying spindle 12 align themselves, thus favoring the coupling of the two mechanical complementary elements 10, 11.

Finally and also advantageously, in other preferred embodiments, the reverse image of the two mechanical elements 10, 11 may have various different configurations, such as, for example, with an irregular polygonal or star-shaped base, or any other form suitable to center and also to identify a possible correct rotation of the motor shaft 2 with respect to the tool-carrying spindle 12.

From the above description it is clear that the technical characteristics of the system for the identification of a proper position of attachment / release of a tool, for a multi-function operating machine, which is the object of the present invention, give many and important advantages, such as the advantages mentioned above.

## Claims

1. Multifunction machine tool comprising a motor (1), a transmission shaft (2) of said motor (1), a rod (3) for the attachment of a tool, a cylinder with a piston (4) for the change of said tool, a system for the identification of the proper position of attachment/release of the tool,
a first mechanical element (10), fittable to said rod (3), and a second mechanical element (11), fittable on said piston (4) and **characterized in that** the second mechanical element (11) presents a profile matching and complementary to said first mechanical element (10).

2. A multifuntion machine
tool according to claim 1, **characterized in that** said first mechanical element (10) comprises a protruding and substantially tapered part (13), while said second mechanical element(11) comprises a hollow (14) with a substantially decreasing section.

3. A multifuntion machine
tool according to claim 2, **characterized in that** said protruding part (13) of said first mechanical element (10) and said hollow (14) of said second mechanical element (11) provide a substantially conical shape or of a frustum of cone,
complementary to each other.

4. A multifuntion machine
tool according to claim 2,
**characterized in that** said protruding part (13) of said first mechanical element (10) and said hollow (14) of said second mechanical element (11) provide a substantially pyramidal shape or of a truncated pyramid, complementary to each other.

5. A multifunction machine
tool according to claim 2, **characterized in that** said protruding part (13) of said first mechanical element (10) and said hollow (14) of said second mechanical element (11) provide an irregular polygonal section, complementary to each other

6. A multifunction machine
tool according to claim 2, **characterized in that** said protruding part (13) of said first mechanical element (10) and said hollow (14) of said second mechanical element (11) provide a substantially star-shaped section, complementary to each other.

## Patentansprüche

1. Multifunktionswerkzeugmaschine, umfassend einen Motor (1), eine Antriebswelle (2) des Motors (1), eine Stange (3) zur Befestigung eines Werkzeugs, einen Zylinder mit einem Kolben (4) für das Wechseln des Werkzeugs, ein System für die Identifikation der richtigen Position zur Befestigung/ Freigabe des Werkzeugs, ein erstes mechanisches Element (10), anbringbar an der Stange (3), und ein zweites mechanisches Element (11), anbringbar an dem Kolben (4) und **dadurch gekennzeichnet, dass** das zweite mechanische Element (11) ein Profil aufweist, das zu dem des ersten mechanischen Elements (10) passt und komplementär ist.

2. Eine Multifunktionswerkzeugmaschine nach Anspruch 1, **dadurch gekennzeichnet, dass** das erste mechanische Element (10) einen hervorstehenden und sich im Wesentlichen verjüngenden Teil (13) aufweist, während das zweite mechanische Element (11) eine Ausnehmung (14) mit einem im Wesentlichen abnehmenden Abschnitt aufweist.

3. Eine Multifunktionswerkzeugmaschine nach Anspruch 2, **dadurch gekennzeichnet, dass** der vorstehende Teil (13) des ersten mechanischen Elements (10) und die Ausnehmung (14) des zweiten mechanischen Elements (11) eine im Wesentlichen konische Form oder einen Kegelstumpf ausbilden, die zueinander komplementär sind.

4. Eine Multifunktionswerkzeugmaschine nach Anspruch 2, **dadurch gekennzeichnet, dass** der vorstehende Teil (13) des ersten mechanischen Elements (10) und die Ausnehmung (14) des zweiten mechanischen Elements (11) eine im Wesentlichen pyramidenförmige Form oder pyramidenstumpf-förmige Form ausbilden, die komplementär zueinander sind.

5. Eine Multifunktionswerkzeugmaschine nach Anspruch 2, **dadurch gekennzeichnet, dass** der vorstehende Teil (13) des ersten mechanischen Elements (10) und die Ausnehmung (14) des zweiten mechanischen Elements (11) einen unregelmäßigen polygonalen Querschnitt bereitstellen, die zueinander komplementär sind.

6. Eine Multifunktionswerkzeugmaschine nach Anspruch 2, **dadurch gekennzeichnet, dass** der vorstehende Teil (13) des ersten mechanischen Elements (10) und die Ausnehmung (14) des zweiten mechanischen Elements (11) einen im Wesentlichen sternförmigen Querschnitt ausbilden, die zueinander komplementär sind.

## Revendications

1. Machine-outil multifonction, comprenant un moteur (1), un arbre de transmission (2) dudit moteur (1), une tige (3) pour la fixation d'un outil, un cylindre avec un piston (4) pour le changement dudit outil, un système pour l'identification de la position correcte de fixation/libération de l'outil, un premier élément mécanique (10), pouvant être adapté sur ladite tige (3), et un deuxième élément mécanique (11), pouvant être adapté sur ledit piston (4), et **caractérisée en ce que** le deuxième élément mécanique (11) présente un profil correspondant audit premier élément mécanique (10) et complémentaire à celui-ci.

2. Machine-outil multifonction selon la revendication 1, **caractérisée en ce que** ledit premier élément mécanique (10) comprend une partie saillante et sensiblement effilée (13), tandis que ledit deuxième élément mécanique (11) comprend un creux (14) avec une section sensiblement décroissante.

3. Machine-outil multifonction selon la revendication 2, **caractérisée en ce que** ladite partie saillante (13) dudit premier élément mécanique (10) et ledit creux (14) dudit deuxième élément mécanique (11) présentent une forme sensiblement conique ou d'un tronc de cône, complémentaires l'une à l'autre.

4. Machine-outil multifonction selon la revendication 2, **caractérisée en ce que** ladite partie saillante (13) dudit premier élément mécanique (10) et ledit creux (14) dudit deuxième élément mécanique (11) présentent une forme sensiblement pyramidale, ou d'une pyramide tronquée, complémentaires l'une à l'autre.

5. Machine-outil multifonction selon la revendication 2, **caractérisée en ce que** ladite partie saillante (13) dudit premier élément mécanique (10) et ledit creux (14) dudit deuxième élément mécanique (11) présentent une section polygonale irrégulière, complémentaires l'une à l'autre.

6. Machine-outil multifonction selon la revendication 2, **caractérisée en ce que** ladite partie saillante (13) dudit premier élément mécanique (10) et ledit creux (14) dudit deuxième élément mécanique (11) présentent une section sensiblement en forme d'étoile, complémentaires l'une à l'autre.
